# EUROPÄISCHE PATENTSCHRIFT

(11) **EP 2 127 968 B1**
(45) Veröffentlichungstag und Bekanntmachung des Hinweises auf die Patenterteilung: **20.08.2014**
(21) Anmeldenummer: 09159619.7
(22) Anmeldetag: 07.05.2009
(51) Int. Cl.: B60S 1/24, F16C 11/06

(54) **Kurbel für einen Wischerantrieb sowie Wischerantrieb**
Crank for a wiper drive and wiper drive
Manivelle pour un entraînement d'essuie-glace et entraînement d'essuie-glace

(30) Priorität: 21.05.2008 DE 102008001931
(43) Veröffentlichungstag der Anmeldung: 02.12.2009
(73) Patentinhaber: ROBERT BOSCH GMBH, 70442 Stuttgart (DE)
(72) Erfinder: Trenkle, Lothar, 77833, Ottersweier (DE); Weiler, Michael, 77833, Ottersweier (DE)

(56) Entgegenhaltungen:
- DE-A1- 4 323 551
- DE-A1- 10 013 201
- DE-A1-102006 004 110
- JP-A- H08 128 438
- US-A- 4 264 997

## Beschreibung

### Stand der Technik

Die Erfindung betrifft eine um eine Drehachse rotierbare Kurbel für einen Wischerantrieb gemäß dem Oberbegriff des Anspruchs 1. Ferner betrifft die Erfindung einen Wischerantrieb gemäß Anspruch 9.

Das Antriebsdrehmoment für Wischerantriebe wird so ausgelegt, dass die Wischerarme unter schwierigsten Bedingungen (hoher Gummireibwert, hohe Wischerarmauflagekraft, großes Getriebeübersetzungsverhältnis, Windlast) noch durchgezogen werden können. Augrund von Fertigungsstreuungen und Umwelteinflüssen, wie Temperatur und ggf. elektrischer Spannung, ist das in der Praxis bevorzugt bei einigen Wischerantrieben maximal auftretende Antriebsdrehmoment etwa 50% höher als das minimale, einen störungsfreien Betrieb gewährleistende, Antriebsdrehmoment (Auslegungsdrehmoment). Insbesondere diese hohen Antriebsdrehmomente erzeugen beim Blockieren des Wischergestänges in der Wendelage hohe Stangenkräfte im Getriebegestänge des Wischerantriebs, bedingt durch einen unvermeidbaren Kniehebeleffekt. Ein Blockieren des Gestänges in der Wendelage ist dabei in der Regel durch das Aufbauen von Schneekeilen bei Schneefall zurückzuführen. Je steifer der Wischerantrieb, genauer dessen Getriebegestänge, ausgelegt ist, desto höher wird die auf die Kurbel des Wischerantriebes wirkende Stangenkraft. In der Praxis treten dabei Kräfte bis etwa 2.500 N auf. Um eine Beschädigung des Wischerantriebes bei derartig hohen Stangenkräften zu vermeiden, ist es bekannt, die Kurbel (Motorkurbel) mit einem Federelement auszustatten, das mit einem Gelenkzapfen zum Festlegen des Wischergestänges derart zusammenwirkt, dass der Gelenkzapfen bei Überschreiten einer maximal zulässigen Kraftbelastung entgegen der Federkraft des Federelementes um eine Schwenkachse aus einer Betriebsposition in eine Entlastungsposition in Richtung der Drehachse der Kurbel verschwenkt wird. Dabei erstreckt sich die Schwenkachse bei bekannten Kurbeln parallel zur Drehachse der Kurbel. Des Weiteren ist die Feder bei bekannten Kurbeln immer als eine den Gelenkzapfen in seine Betriebsposition ziehende Feder ausgebildet. Beide letztgenannten Konstruktionsmerkmale führen (unabhängig voneinander) zu einer flächenintensiven Kurbelkonstruktion, was im Hinblick auf den knappen zur Verfügung stehenden Bauraum verbesserungsbedürftig erscheint.

Weiterhin ist aus der DE 100 13 201 A1 eine Kurbel nach dem Oberbegriff des Anspruchs 1 bekannt. Bei dieser Kurbel dient die Feder dazu, während der Wischbewegung des Wischblatts eine konstante Anpresskraft an der Fahrzeugscheibe zu erzeugen. Hierzu ist das Wischblatt bzw. die Feder, aus einer Mittellage heraus, in beide Richtungen auslenkbar. Eine Überlastsicherung, die anspricht, wenn beispielsweise bei einer Schneelast auf der Fahrzeugscheibe ein erhöhter Widerstand auf das Wischblatt in Wischrichtung erzeugt wird, ist mittels der erwähnten Feder jedoch nicht möglich.

### Offenbarung der Erfindung

Der Erfindung liegt daher die Aufgabe zugrunde, eine Kurbel für einen Wischerantrieb nach dem Oberbegriff des Anspruchs 1 derart weiterzubilden, dass diese bei minimiertem Flächenbedarf eine Überlastsicherung ermöglicht, wenn in Wischrichtung des Wischerarms erhöhte Kräfte auftreten. Ferner besteht die Aufgabe darin, einen entsprechend optimierten Wischerantrieb, insbesondere einen Frontwischerantrieb, vorzuschlagen.

Diese Aufgabe wird hinsichtlich der Kurbel (sogenannte Motorkurbel) für einen Wischerantrieb mit den Merkmalen des Anspruchs 1 gelöst. Hinsichtlich des Wischerantriebes wird die Aufgabe mit den Merkmalen des Anspruchs 9 gelöst. Vorteilhafte Weiterbildungen der Erfindung sind in den Unteransprüchen angegeben.

Von besonderem Vorteil ist eine Ausführungsform, bei der die Schwenkachse, um die der Gelenkzapfen verschwenkbar gelagert ist, parallel zur Flächenerstreckung einer Kurbelplatte der Kurbel verläuft, wobei in die Kurbelplatte bevorzugt eine von der Drehachse der Welle durchsetzte Aufnahmeöffnung zum lösbaren Festlegen der Kurbel an einer Abtriebswelle des Wischerantriebes eingebracht ist. Dabei kann es sich bei der drehfest mit der Kurbel verbindbaren Welle, je nach Ausführungsform des eigentlichen Antriebes, unmittelbar um eine Motorwelle eines elektrischen Antriebsmotors handeln oder um die Abtriebswelle eines, insbesondere als Schneckengetriebe ausgebildeten, von einem elektromotorischen Antrieb angetriebenen Getriebes. Im Hinblick auf eine weiter optimierte Bauraumminimierung ist es von Vorteil, wenn die Schwenkachse innerhalb einer Ausnehmung in der Kurbelplatte angeordnet ist, wobei bevorzugt der Gelenkzapfen oder eine Gelenkzapfenhalterung abschnittsweise in dieser Ausnehmung angeordnet und von der Schwenkachse durchsetzt ist. Besonders bevorzugt verläuft die Schwenkachse quer zur Längserstreckung der Kurbel.

Von besonderem Vorteil ist eine Ausführungsform der Kurbel, bei der der Gelenkzapfen oder eine fakultativ vorgesehene Gelenkzapfenhalterung einen Anschlag aufweist, der die Entlastungsposition definiert, d. h. die Schwenkbewegung des Gelenkzapfens entgegen der Federkraft der Feder begrenzt.

Im Hinblick auf eine Minimierung der Bauelementzahl der Kurbel ist eine Ausführungsform besonders bevorzugt, bei der der Anschlag in der Entlastungsposition an der Kurbelplatte anschlägt, d. h. unmittelbar mit der Kurbelplatte zusammenwirkt.

Eine besonders robuste Kurbelkonstruktion wird erhalten, wenn die den Gelenkzapfen beaufschlagende Feder als Bügelfeder ausgebildet ist, die bestrebt ist, den Gelenkbolzen in seiner Betriebsposition zu halten bzw. in diese zurückzustellen. Dabei ist eine Ausführungsform realisierbar, bei der die Bügelfeder zum einen in einer Auskerbung der Kurbelplatte und zum anderen in einer Auskerbung des Gelenkzapfens bzw. einer Gelenkzapfenhalterung formschlüssig eingreift. Besonders bevorzugt ist eine Ausführungsform, bei der die Feder, insbesondere die Bügelfeder, an einer bei im Kraftfahrzeug montierten Zustand unteren Seite der Kurbelplatte angreifend angeordnet ist.

Besonders bevorzugt ist eine Ausführungsform der Kurbel, bei der die den Gelenkzapfen kraftbeaufschlagende Feder als Blattfeder ausgebildet ist, die vorzugsweise den Gelenkbolzen in Richtung seiner Betriebsposition kraftbeaufschlagt. Besonders bevorzugt ist dabei eine Ausführungsform, bei der der Gelenkzapfen oder eine Aufnahmeöffnung (Durchgangsloch) in einer Kurbelplatte durchsetzt und dort mittels eines Anschlages unmittelbar mit der Unterseite der Kurbelplatte zusammenwirkt, wobei der Anschlag die Betriebsposition definiert, d. h. die Verstellbewegung von der Entlastungsposition zurück in die Betriebsposition begrenzt.

Eine weitere Möglichkeit zur Minimierung des Flächenbedarfs einer Kurbel für einen Wischerantrieb besteht darin, die den Gelenkzapfen kraftbeaufschlagende Feder als Druckfeder auszubilden, die den Gelenkzapfen in Richtung seiner Betriebsposition drückt. Dabei kann die Schwenkachse, wie zuvor beschrieben, senkrecht zur Drehachse der Kurbel verlaufend angeordnet werden, alternativ jedoch auch parallel zu dieser. Das Vorsehen einer Druckfeder ermöglicht dabei eine Anordnung, bei der die Feder im Bereich der Drehachse der Kurbel an einer Kurbelplatte angreift, wodurch der Flächenbedarf der Kurbel weiter minimiert wird.

Im Hinblick auf die konkrete Ausbildung der als Druckfeder ausgebildeten Feder gibt es unterschiedlichste Möglichkeiten. So ist es beispielsweise denkbar, die Druckfeder als Schenkelfeder auszubilden, wobei es in diesem Fall bevorzugt ist, dass die Schenkelfeder mit einem Schenkel an einer Kurbelplatte und mit dem anderen Schenkel an einer, insbesondere plattenförmigen, Gelenkzapfenhalterung angreift, die um die, insbesondere parallel zur Drehachse der Kurbel ausgerichtete, Gelenkachse relativ zur Kurbelplatte verschwenkbar angeordnet ist. Besonders bevorzugt ist dabei eine Ausführungsform, bei der an der Gelenkzapfenhalterung ein Anschlag angeformt ist, der mit der Kurbelplatte zusammenwirkt und der die Betriebsposition des Gelenkzapfens definiert. Alternativ ist es möglich, die Druckfeder als Blattfeder auszubilden, wobei in diesem Fall die Blattfeder bevorzugt auf einer Flachseite, insbesondere einer Oberseite, einer Kurbelplatte der Kurbel angeordnet ist und somit die Flächenerstreckung der Kurbel minimiert. Eine weitere Alternative besteht darin, die Feder als Schraubendruckfeder auszubilden, wobei die Feder in diesem Fall bevorzugt vollständig in einem Bereich zwischen einer Kurbelplatte und einer, insbesondere plattenförmigen, Gelenkzapfenhalterung angeordnet ist und somit eine sich in Umfangsrichtung in der Rotationsebene erstreckende, gemeinsame Einhüllende der Kurbelplatte und der plattenförmigen Gelenkzapfenhalterung in keiner Stellung nach außen überragt. Besonders bevorzugt ist es dabei, wenn Halterungen für die Schraubendruckfeder endseitig in diese hineinragend angeordnet sind.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1a:: eine mögliche Ausführungsform einer Kurbel mit senkrecht zur Drehachse verlaufender Schwenkachse und mit einem sich in einer Betriebsposition befindlichem Gelenkzapfen,
- Fig. 1b:: die Kurbel gemäß Fig. 1a mit in einer Entlastungsposition verschwenktem Gelenkzapfen,
- Fig. 2:: ein Ausführungsbeispiel einer nicht von der Erfindung umfassten Kurbel mit einer als Druckfeder ausgebildeten Schenkelfeder,
- Fig. 3:: ein weiteres alternatives Ausführungsbeispiel einer nicht von der Erfindung umfassten Kurbel mit einer als Schraubendruckfeder ausgebildeten Feder und
- Fig. 4:: ein alternatives Ausführungsbeispiel einer erfindungsgemäßen Kurbel mit einer auf einer Oberseite einer Kurbelplatte angeordneten, als Druckfeder ausgebildeten, Blattfeder.

### Ausführungsformen der Erfindung

In den Figuren sind gleiche Bauteile und Bauteile mit der gleichen Funktion mit den gleichen Bezugszeichen gekennzeichnet.

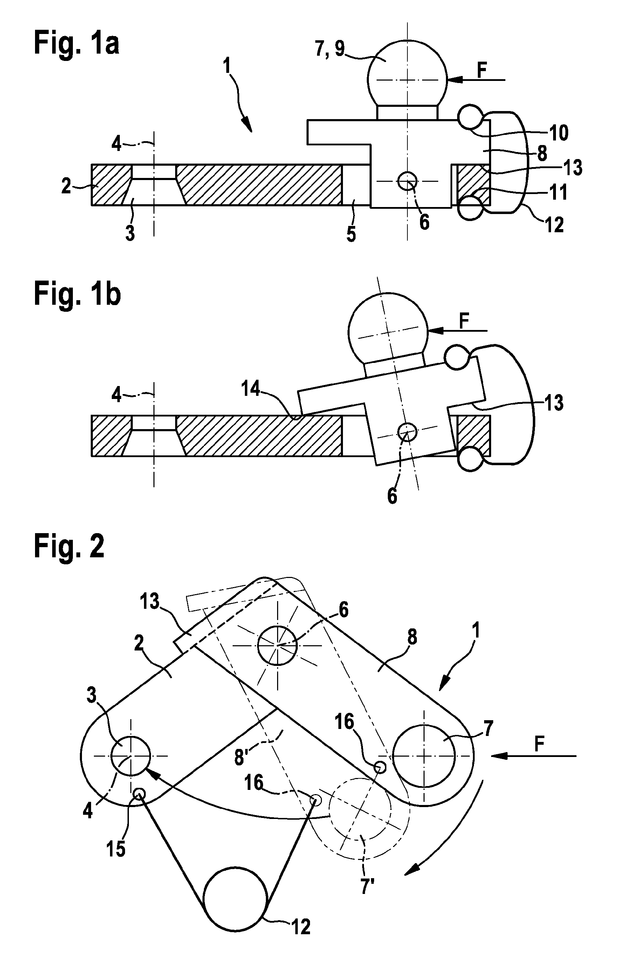

In den Fig. 1a und 1b ist eine teilgeschnittene Ansicht einer Kurbel 1 (sogenannte Motorkurbel) für einen nicht weiter dargestellten, an sich bekannten, Wischerantrieb gezeigt. Die Kurbel 1 umfasst eine rechteckig konturierte Kurbelplatte 2, in der eine teilweise konisch ausgeformte Aufnahmebohrung 3 zum Festlegen der Kurbel 1 an einer nicht gezeigten Abtriebswelle einer Antriebs-Getriebe-Einheit eingebracht ist. Eine gedachte Drehachse 4, um die die Kurbel 1 mittels der Getriebe-Antriebs-Einheit rotierbar ist, verläuft zentrisch durch die Aufnahmebohrung 3 und erstreckt sich senkrecht zur Flächenerstreckung der Kurbelplatte 2.

In die Kurbelplatte 2 ist mit Radialabstand zur Drehachse 4 ein rechteckig konturiertes Durchgangsloch 5 (Aufnahmeöffnung) eingebracht, das von einer Schwenkachse 6 für einen Gelenkzapfen 7 (Gelenkbolzen) quer zur Längserstreckung der Kurbelplatte 2 durchsetzt ist. Die Schwenkachse 6 verläuft senkrecht zur Drehachse 4. Die Schwenkachse 6 durchsetzt dabei eine Gelenkzapfenhalterung 8, an der der Gelenkzapfen 7 festgelegt ist. Alternativ ist ein unmittelbares Durchsetzen des Durchgangsloches 5 mit einem Gelenkzapfen 7 (ohne Gelenkzapfenhalterung 8) realisierbar.

An einem teilkugelförmigen Kopf 9 des Gelenkzapfens 7 sind in an sich bekannter Weise Stangen eines nicht dargestellten Getriebegestänges des Wischerantriebes gelenkig festlegbar.

In die das Durchgangsloch 5 durchsetzende Gelenkzapfenhalterung 8, genauer in deren Oberseite, ist eine erste Einkerbung 10 eingebracht. Der ersten Einkerbung 10 liegt auf einer von dem Kopf 9 des Gelenkzapfens 7 angewandten unteren Seite der Kurbelplatte 2 eine in diese eingebrachte zweite Einkerbung 11 gegenüber. In die Einkerbungen 10, 11 greift eine randseitig angeordnete, als Bügelfeder ausgebildete, Feder 12 ein, die bestrebt ist, den Gelenkzapfen 7 in seine in Fig. 1a gezeigte Betriebsposition zu verstellen. Die Betriebsposition wird definiert durch einen von einem Absatz der Gelenkzapfenhalterung 8 gebildeten Anschlag 13, der in der Betriebsposition flächig auf der Oberseite der Kurbelplatte 2 aufliegt.

Überschreitet die auf den Gelenkzapfen 7 (hier Kugelzapfen) wirkende Stangenkraft F einen definierten Wert von beispielsweise 1.000 N, wird der Gelenkzapfen 7 mit der Gelenkzapfenhalterung 8 um die Schwenkachse 6 in eine in Fig. 1b gezeigte Entlastungsposition verschwenkt, in der der Abstand des Kopfes 9 des Gelenkzapfens 7 zur Drehachse 4 im Vergleich zur Betriebsposition verringert ist. Die Entlastungsposition wird definiert von einem an der Gelenkzapfenhalterung 8 angeformten Anschlag 14, der in der Entlastungsposition an der Oberseite der Kurbelplatte 2 anliegt.

In Fig. 2 ist ein nicht von der Erfindung umfasstes Ausführungsbeispiel einer Kurbel 1 - diesmal in einer Draufsicht - gezeigt. Zu erkennen ist eine eine Aufnahmebohrung 3 aufweisende Kurbelplatte 2, die gelenkig mit einer plattenförmigen Gelenkzapfenhalterung 8 verbunden ist, an der der eigentliche Gelenkzapfen 7 festgelegt ist, wobei alternativ eine einstückige Ausbildung von Gelenkzapfen und Gelenkzapfenhalterung realisierbar ist. Die Schwenkachse 6, über die die Gelenkzapfenhalterung 8 mit der Kurbelplatte 2 gelenkig verbunden ist, erstreckt sich senkrecht zur Flächenerstreckung der Kurbelplatte 2 und damit parallel zur Drehachse 4, um die die Kurbel 1 rotierbar ist.

In die Kurbelplatte 2 ist unmittelbar benachbart zur Aufnahmebohrung 3 eine erste Bohrung 15 eingebracht, in die ein erster Schenkel einer als Schenkelfeder ausgebildeten Feder 12 eingreift. Der andere Schenkel der Schenkelfeder greift in eine zweite, unmittelbar benachbart zu dem Gelenkzapfen 7 in die plattenförmige Gelenkzapfenhalterung 8 eingebrachte, Bohrung 16.

Die als Schenkelfeder ausgebildete Feder 12 ist als Druckfeder ausgebildet, die bestrebt ist, den Gelenkzapfen 7 in seine in der Zeichnungsebene rechts dargestellten Betriebsposition zu verstellen bzw. dort zu halten. Überschreitet die auf den Gelenkzapfen 7 wirkende Stangenkraft F einen maximalen Wert von beispielsweise 1.000 N, wird die Gelenkzapfenhalterung 8 zusammen mit dem Gelenkzapfen 7 um die Schwenkachse 6 in die in der Zeichnungsebene links von der Betriebsposition angedeutete Entlastungsposition verschwenkt, in der der Abstand zwischen dem Gelenkzapfen 7 und der Drehachse 4 im Vergleich zur Betriebsposition verringert ist.

An der Gelenkzapfenhalterung 8 ist durch Umbiegen ein Anschlag 13 angeformt, der die Betriebsposition definiert und bei in der Betriebsposition befindlichem Gelenkzapfen 7 seitlich an der Kurbelplatte 2 anliegt.

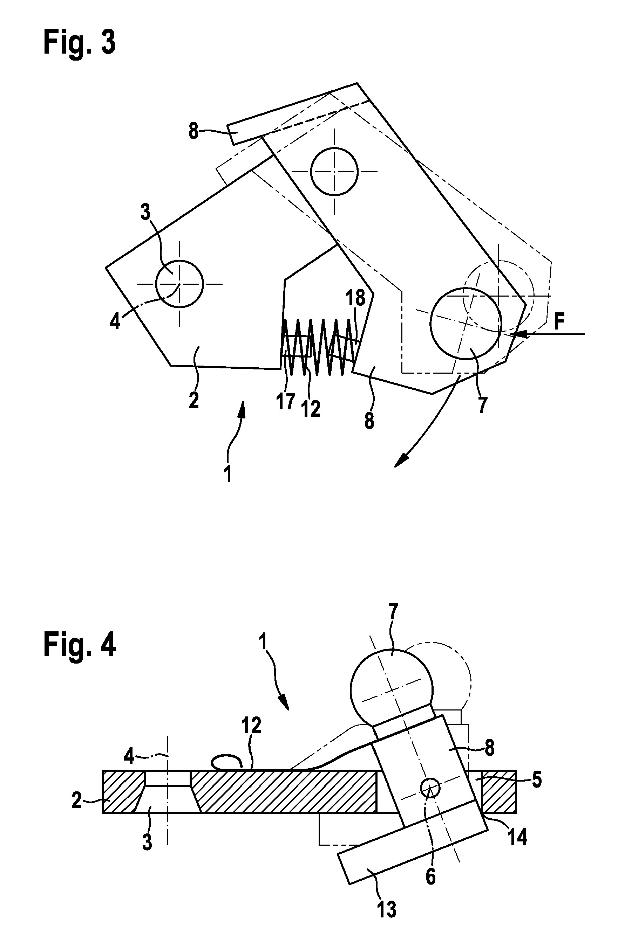

Das in Fig. 3 gezeigte, ebenfalls nicht von der Erfindung umfasste Ausführungsbeispiel einer Kurbel 1 entspricht im Wesentlichen dem in Fig. 2 gezeigten und zuvor beschriebenen Ausführungsbeispiel. Der wesentliche Unterschied besteht darin, dass die Feder 12 als Schraubendruckfeder ausgebildet ist, die in einem Bereich zwischen der Kurbelplatte 2 und der Gelenkzapfenhalterung 8 angeordnet ist. In die Feder 12 ragt von der Kurbelplatte 2 her ein erster Zapfen 17 hinein, der als Halterung und Führung für die Feder 12 dient. Dem ersten Zapfen 17 liegt ein zweiter Zapfen 18 axial gegenüber, der von dem gegenüberliegenden Ende in die Feder 12 eingreift und der an der plattenförmigen Gelenkzapfenhalterung 8 angeformt oder an dieser festgelegt ist. In Fig. 3 befindet sich der Gelenkzapfen 7 in seiner Entlastungsposition, in die er entgegen der Federkraft der Feder 12 aufgrund der Stangenkraft F verstellt wurde. Strichliert ist die Betriebsposition dargestellt, in der ein an die plattenförmige Gelenkzapfenhalterung 8 angeformter Anschlag seitlich an der Kurbelplatte 2 anliegt.

Das in Fig. 4 gezeigte erfindungsgemäße Ausführungsbeispiel einer Kurbel 1 entspricht im Wesentlichen dem in den Fig. 1a und 1b gezeigten Ausführungsbeispiel, mit dem Unterschied, dass die dort als Bügelfeder ausgebildete Feder 12 durch eine als Blattfeder ausgebildete Feder 12 ersetzt wurde, wobei die als Blattfeder ausgebildete Feder 12 zum einen auf einer Kurbelplattenoberseite und zum anderen an einem Übergangsbereich zwischen dem Gelenkzapfen 7 und der Gelenkzapfenhalterung 8 festgelegt ist.

Wie sich aus Fig. 4 ergibt, ist die Gelenkzapfenhalterung 8 in dem Ausführungsbeispiel gemäß Fig. 4 unterschiedlich von der Gelenkzapfenhalterung 8 gemäß dem Ausführungsbeispiel gemäß den Fig. 1a und 1b ausgebildet. Die Gelenkzapfenhalterung 8 durchsetzt das Durchgangsloch 5 und weist auf der Unterseite der Kurbelplatte 2 einen Anschlag 13 auf, der in der Betriebsposition (strichliert dargestellt) des Gelenkzapfens 7 an der Unterseite der Kurbelplatte 2 anliegt. Die Entlastungsposition wird definiert von einem mit einer unteren Umfangskante des Durchgangsloches 5 zusammenwirkenden, an der Gelenkzapfenhalterung 8 ausgebildeten, Anschlag 14.

Wesentlich ist bei dem Ausführungsbeispiel gemäß Fig. 4, dass die Schwenkachse 6, um die der Gelenkzapfen 7 verschwenkbar ist, senkrecht zur Drehachse 4 der Kurbel 1 verläuft.

## Patentansprüche

1. Um eine Drehachse (4) rotierbare Kurbel (1) für einen Wischerantrieb, mit einem Gelenkzapfen (7) zum gelenkigen Anbinden eines Wischergestänges, wobei der Gelenkzapfen (7) entgegen der Federkraft einer Feder (12) relativ zu der Drehachse (4) aus einer Betriebsposition in eine Entlastungsposition um eine Schwenkachse (6) verschwenkbar ist, und wobei die Schwenkachse (6) senkrecht zur Drehachse (4) der Kurbel (1) verläuft
**dadurch gekennzeichnet,**
- **dass** an dem Gelenkzapfen (7) oder an einer insbesondere plattenförmigen Gelenkzapfenhalterung (8) ein, insbesondere mit einer Kurbelplatte (2) der Kurbel (1) zusammenwirkender, die Betriebsposition definierender Anschlag (13) angeordnet ist.

2. Kurbel nach Anspruch 1,
**dadurch gekennzeichnet,**
**dass** sich die Schwenkachse (6) parallel zur Flächenerstreckung einer Kurbelplatte (2) der Kurbel (1) verläuft.

3. Kurbel nach einem der Ansprüche 1 oder 2,
**dadurch gekennzeichnet,**
**dass** an dem Gelenkzapfen (7) oder einer Gelenkzapfenhalterung (8) ein Anschlag (14) zum Begrenzen der Schwenkbewegung des Gelenkzapfens (7) entgegen der Federkraft der Feder (12) vorgesehen ist.

4. Kurbel nach Anspruch 3,
**dadurch gekennzeichnet,**
**dass** der Anschlag (14) mit der Kurbelplatte (2) zusammenwirkend angeordnet ist.

5. Kurbel nach einem der vorhergehenden Ansprüche,
**dadurch gekennzeichnet,**
**dass** die Feder (12) als Bügelfeder ausgebildet ist.

6. Kurbel nach einem der Ansprüche 2 bis 4,
**dadurch gekennzeichnet,**
**dass** die Feder (12) als Blattfeder ausgebildet ist.

7. Kurbel nach einem der Ansprüche 2 bis 4,
**dadurch gekennzeichnet,**
**dass** die Feder (12) als eine den Gelenkzapfen (7) in Richtung der Betriebsposition druckbeaufschlagende Druckfeder ausgebildet ist.

8. Kurbel nach Anspruch 7,
**dadurch gekennzeichnet,**
**dass** die Druckfeder als Schraubenfeder oder als Schenkelfeder oder als Blattfeder ausgebildet ist.

9. Wischerantrieb, insbesondere Frontwischerantrieb, mit einer rotierend angetriebenen Kurbel (1) nach einem der vorhergehenden Ansprüche.

## Claims

1. Crank (1) which is rotatable about an axis of rotation (4) and is intended for a wiper drive, with a pivot pin (7) for the articulated connection of a wiper linkage, wherein the pivot pin (7) is pivotable relative to the axis of rotation (4) about a pivot axis (6) from an operating position into a release position counter to the spring force of a spring (12),
**characterized**
- **in that** a stop (13) which interacts in particular with a crank plate (2) of the crank (1) and defines the operating position is arranged on the pivot pin (7) or on an in particular plate-like pivot pin holder (8).

2. Crank according to Claim 1, **characterized in that** the pivot axis (6) runs parallel to the surface extent of a crank plate (2) of the crank (1).

3. Crank according to either of Claims 1 and 2, **characterized in that** a stop (14) for limiting the pivoting movement of the pivot pin (7) counter to the spring force of the spring (12) is provided on the pivot pin (7) or a pivot pin holder (8).

4. Crank according to Claim 3, **characterized in that** the stop (14) is arranged in a manner interacting with the crank plate (2).

5. Crank according to one of the preceding claims, **characterized in that** the spring (12) is designed as a bow spring.

6. Crank according to one of Claims 2 to 4, **characterized in that** the spring (12) is designed as a leaf spring.

7. Crank according to one of Claims 2 to 4, **characterized in that** the spring (12) is designed as a compression spring pressurizing the pivot pin (7) in the direction of the operating position.

8. Crank according to Claim 7, **characterized in that** the compression spring is designed as a helical spring or as a leg spring or as a leaf spring.

9. Wiper drive, in particular front wiper drive, with a rotatingly driven crank (1) according to one of the preceding claims.

## Revendications

1. Manivelle (1) pouvant tourner autour d'un axe de rotation (4) pour un entraînement d'essuie-glace, comprenant un boulon d'articulation (7) pour la liaison articulée d'une tringlerie d'essuie-glace, le boulon d'articulation (7) pouvant être pivoté autour d'un axe de pivotement (6) à l'encontre de la force de ressort d'un ressort (12), par rapport à l'axe de rotation (4), à partir d'une position de fonctionnement jusqu'à une position de détente, et l'axe de pivotement (6) s'étendant perpendiculairement à l'axe de rotation (4) de la manivelle (1),
**caractérisée**
**en ce qu'**une butée (13) définissant la position de fonctionnement, et en particulier coopérant avec une plaque de manivelle (2) de la manivelle (1), est disposée sur le boulon d'articulation (7) ou sur un support de boulon d'articulation (8) en particulier en forme de plaque.

2. Manivelle selon la revendication 1,
**caractérisée**
**en ce que** l'axe de pivotement (6) s'étend parallèlement à l'étendue de surface d'une plaque de manivelle (2) de la manivelle (1).

3. Manivelle selon l'une des revendications 1 et 2, caractérisée 30 caractèri en ce qu'une butée (14) pour limiter le déplacement de pivotement du boulon d'articulation (7) à l'encontre de la force de ressort du ressort (12) est prévue sur le boulon d'articulation (7) ou sur un support de boulon d'articulation (8).

4. Manivelle selon la revendication 3,
**caractérisée**
**en ce que** la butée (14) est disposée de manière à coopérer avec la plaque de manivelle (2).

5. Manivelle selon l'une quelconque des revendications précédentes,
**caractérisée**
**en ce que** le ressort (12) est réalisé sous forme de ressort en étrier.

6. Manivelle selon l'une quelconque des revendications 2 à 4,
**caractérisée**
**en ce que** le ressort (12) est réalisé sous forme de ressort à lame.

7. Manivelle selon l'une quelconque des revendications 2 à 4,
**caractérisée**
**en ce que** le ressort (12) est réalisé sous forme de ressort de compression sollicitant en pression le boulon d'articulation (7) en direction de la position de fonctionnement.

8. Manivelle selon la revendication 7,
**caractérisée**
**en ce que** le ressort de compression est réalisé sous forme de ressort hélicoïdal ou sous forme de ressort à branches ou sous forme de ressort à lame.

9. Entraînement d'essuie-glace, en particulier entraînement d'essuie-glace avant, comprenant une manivelle (1) entraînée en rotation selon l'une quelconque des revendications précédentes.
